# EUROPÄISCHE PATENTSCHRIFT

(11) **EP 1 837 072 B1**
(45) Veröffentlichungstag und Bekanntmachung des Hinweises auf die Patenterteilung: **20.04.2011**
(21) Anmeldenummer: 07000446.0
(22) Anmeldetag: 10.01.2007
(51) Int. Cl.: B01J 8/00, B01J 8/06

(54) **Rohrbündelreaktor-Beschickungsvorrichtung**
Multi-tube reactor loading device
Dispositif de chargement d'un réacteur à faisceau

(30) Priorität: 23.03.2006 DE 102006013488
(43) Veröffentlichungstag der Anmeldung: 26.09.2007
(73) Patentinhaber: SÜD-CHEMIE AG, 80333 München (DE)
(72) Erfinder: Hoffmann, Michael, 100004 Beijing (CN); Dialer, Harald, 81545 München (DE)
(74) Vertreter: Gritschneder, Martin

(56) Entgegenhaltungen:
- WO-A-98/02238
- WO-A-2006/100070

## Beschreibung

Die Erfindung betrifft eine Beschickungsvorrichtung für Rohrbündelreaktoren, gemäß dem Oberbegriff von Anspruch 1 sowie ein Verfahren zum Betrieb einer solchen Beschickungsvorrichtung nach dem Oberbegriff des Anspruchs 22.

Das Befüllen der Rohre von Rohrbündelreaktoren erfordert regelmäßig das Einbringen von körnigen Feststoffen. Seit langem ist es bekannt, dass angesichts der Vielzahl von sich parallel erstreckenden Rohren eine maschinelle Unterstützung für das Befüllen wünschenswert wäre. Ein Beispiel für einen Rohrbündelreaktor ist bereits aus der US-PS 2,070,868 ersichtlich. Bereits dort wird die möglichst gleiche Strömungsgeschwindigkeit der parallelen Rohre angesprochen. Um ein akzeptables Reaktionsergebnis zu erzielen, sollte das Befüllen möglichst gleichmäßig erfolgen. Um dies zu erreichen; muss beim automatischen Befüllen (vgl. z. B. US-PS 3,913,806) häufig manuell nachgearbeitet werden. Nach Möglichkeit sollte eine Brückenbildung vermieden werden; ein vergleichsweise langsames und vorsichtiges Einschütten ist erwünscht.

In dem letzten Jahrzehnt wurden jedoch durchaus auch große Reaktoren mit beispielsweise 20.000 oder 40.000 Rohren realisiert. Beim vorsichtigen manuellen Einschütten muss mit einem signifikanten Zeitbedarf gerechnet werden; nachdem der Platz oberhalb eines Reaktors meist begrenzt ist, können auch nicht beliebig viele Bediener gleichzeitig arbeiten. Jedenfalls ist das manuelle Befüllen eines Reaktors ausgesprochen zeitintensiv. Neben den Lohnkosten muss der Betreiber mit teuren Stillstandzeiten für das Befüllen rechnen.

Es sind daher zahlreiche versuche unternommen worden, das Befüllen zu automatisieren. Um zu gewährleisten, dass stets die gleichen Füllmengen in jedes Rohr eingefüllt werden, wurden Waagen eingesetzt, wobei beispielhaft auf die DE-A1 30 20 845 zu verweisen ist. Bei dieser Lösung wird eine Dosierbaridwaage eingesetzt, um zu gewährleisten, dass gleiche Füllmengen bei den Rohren vorliegen.

Aufgrund der körnigen Konsistenz des Füllmaterials, das meist ein katalytisch beschichtetes Trägermaterial ist, entstehen jedoch auch bei einer derartigen, bereits recht aufwändigen Lösung Probleme. Die einzelnen Füllmaterialpartikel lagern sich aneinander an, so dass es zu ungleichförmigen Befüllungen kommt.

Vielfach erfordern Rohrbündelreaktoren die Einbringung von unterschiedlichen Füllmaterialien oder Katalysatoren in die Rohre des Rohrbündels. Diese unterschiedlichen Füllmaterialien weisen teilweise unterschiedliche Konsistenzen auf, regelmäßig aber jedenfalls eine unterschiedliche Füllmenge. Hierbei ist es dann wichtig, dass nicht nur das gesamte Rohr des Rohrbündelreaktors in der richtigen Füllhöhe und Verdichtung gefüllt ist, sondern dass in jedem Rohr das betreffende Füllmaterial in der je gewünschten Menge vorliegt. Häufig müssen beispielsweise drei oder vier verschiedene Füllmaterialien nacheinander eingebracht werden.

Um dennoch die entsprechenden Füllhöhen gewährleisten zu können, ist es vorgeschlagen worden, lediglich eine Teilbefüllung der Dosierkammern je vorzunehmen. Bei Teilbefüllungen lässt sich jedoch die Füllhöhe der Dosierkammmern selbst schlecht kontrollieren.

Eine weitere vorgeschlagene Möglichkeit besteht darin, mit recht kleinen Dosierkammern zu arbeiten und Mehrfachbefüllungen vorzunehmen. Wenn beispielsweise die drei Füllmaterialien im Verhältnis 3:5:1 in die Rohre des Rohrbündelreaktors eingefüllt werden sollen, wird zunächst die betreffende Dosierkammer dreimal mit dem ersten Material befüllt und entleert, dann fünfmal mit dem zweiten Material und dann einmal mit dem dritten Material. Dieses Verfahren ist jedoch ausgesprochen zeitaufwendig, ähnlich wie das manuelle Befüllen, so dass es sich nicht durchgesetzt hat.

Ferner ist es auch bereits,vorgeschlagen worden, die Dosierkammern selbst mit-vorportionierten Füllmaterialienmengen zu beschicken. Hierbei müssen Katalysatoren für jedes Rohr und jede Katalysatorlage vorverpackt werden. Dies erfordert eine vergleichsweise teure Verpackungsmaschine, aber dennoch ist die Beschickung selbst sehr teuer und langsam, und zugleich anfällig für Bedienfehler.

Ferner ist aus der US-PS 5 890 868 ein auf Schienen verfahrbarer Dosierwagen, bekannt geworden, der nach Befüllen aus einem Vorratsbehälter die entsprechende Dosierung vornimmt. Die Befüllung der einzelnen Kammern der Dosierwagens erfolgt über einen schwenkbar aufgehängten und von einem Pneumatik-Zylinder betätigbaren Schieber, wobei die unterschiedliche Höhe durch eine Höhenverstellung des Zustelltrichters ausgeglichen werden soll. Diese Lösung ist für Mehrfachbefüllung von Rohren im Grunde schlecht geeignet, insbesondere wenn unterschiedliche Höhen pro Füllmaterial realisiert werden sollen.

Zudem entsteht bei einer derartigen Beschickungsvorrichtung ein unterschiedlicher Verdichtungsgrad in den einzelnen Rohren des Rohrbündelreaktors, da die Füllmaterialpartikel beim Fallen in die Rohre dazu neigen, sich in unterschiedlicher Weise aneinander anzulagern. Dementsprechend ist der Durchströmungswiderstand ebenfalls unterschiedlich, was dazu führt, dass durch den unterschiedlichen Differenzdruckverlust in den einzelnen Rohren des Rohrbündelreaktors unterschiedliche Reaktionszeiten entstehen. Die-Ausbeute und die Qualität des erzeugten Reaktionsprodukts sinken damit deutlich.

Um dies zu verhindern, erfolgt üblicherweise ein manuelles Nacharbeiten, das zeitlich zumindest von der Größenordnung her gleich aufwendig wie das manuelle Befüllen ist, oder es werden die schlechte Qualität und Ausbeute des Reaktionsproduktes in Kauf genommen.

Ferner ist bereits vorgeschlagen worden, die Dosierkammereinheiten mit Austragslippen zu versehen, die einerseits das Füllmaterial in den Dosierkammern zurückhalten, aber andererseits der Beschickung der Rohrbündelreaktoren, die über Fallrohre erfolgen kann, dienen. Zwar lässt sich über derartige Austragslippen eine gewisse Vereinzelung erzielen. Die unterschiedliche Konsistenz der verwendeten Füllmaterialien erfordert es jedoch, die Austragslippe einstellbar zu machen, so dass bei groberem Füllmaterial die gleiche Vereinzelungswirkung wie bei feinerem Füllmaterial erzielt wird.

Die Körnigkeit, also die von der Kugelform abweichende Struktur des Füllmaterials erschwert die Einstellbarkeit jedoch, und es muß in Versuchsreihen ermittelt werden, welche Stellung der Austragslippe zu welchem Füllmaterial passt. Um die Förderung über die Austragslippe zu vergleichmäßigen, kann auch bei der vorgeschlagenen Ausgestaltung ein Rüttler vorgesehen sein, der das Austragsverhalten der Austragslippe etwas verbessert. Dennoch ist die Gleichmäßigkeit der Förderung auch mit Rüttler noch nicht ganz befriedigend.

Aus WO 98/02238 ist eine Rohrbündelreaktor-Beschickungsvorrichtung bekannt, die Dosierkammern, die mit katalytisch beschichtetem Trägermaterial befüllbar sind, aufweist.
An die Dosierkammer schließt sich eine Zuführeinrichtung an, über die je ein Rohr des Rohrbündelreaktors befüllbar ist. Die Dosierkammer ist trichterförmig mit einer Schrägfläche und einer Gegenfläche, zwischen deren Enden ein Spalt für den Durchtritt des Füllmaterials besteht. Von diesem Dokument wird als nächsten Stand der Technik ausgegangen.

Daher liegt der Erfindung die Aufgabe zugrunde, eine Beschickungsvorrichtung für Rohrbündelreaktoren gemäß dem Oberbegriff von Anspruch 1 zu schaffen, die auch bei unterschiedlichen Füllmaterialien eine gleichmäßige Beschickung der Rohre der Rohrbündelreaktoren erlaubt.

Diese Aufgabe wird erfindungsgemäß durch die Ansprüche 1 und 22 gelöst. Vorteilhafte Weiterbildungen ergeben sich aus den Unteransprüchen.

Die erfindungsgemäße Beschickungsvorrichtung für Rohrbündelreaktoren weist eine Dosierkammer auf, deren Boden als Schrägfläche ausgebildet ist. Über eine Gegenfläche ist ein Spalt ausgebildet, der sich oberhalb der Schrägfläche erstreckt, bevorzugt etwa in der Mitte. Erfindungsgemäß besonders günstig an dieser Ausbildung eines zentralen Spalts ist die Entlastung einer Austragslippe, die ausgangsseitig, der Dosierkammer vorgesehen sein kann. Zusätzlich zu der von der Dosierkammer in-beliebiger Weise realisierten vereinzelung, entsteht so eine Vorvereinzelung über den zentralen Spalt; die die Wirksamkeit der Gesamtvereinzelung wesentlich erhöht.

Überraschend lässt sich diese Maßnahme auch bei unterschiedlich stückigen Füllmaterialien besonders gut zur Vergleichmäßigung einsetzen. Dies erst recht, wenn der Boden der Dosierkammer mit einem Rüttler versehen ist und der Auftreffpunkt des geschütteten Füllmaterials, das auf der Gegenfläche aufliegt und zur Schrägfläche rutscht, etwa im Bereich der Anlenkung des Rüttlers vorgesehen ist. Der Rüttler kann dann an der Stelle der stärksten Rüttelamplitude dem Spalt gegenüberliegend angeordnet sein, wobei ein Versatz um beispielsweise 10, 20 oder 30% der Erstreckung der Schrägfläche - in der Projektion von der Seite betrachtet - ohne weiteres realisierbar ist. Praktisch wird durch die erfindungsgemäße Maßnahme dann der Spalt rhythmisch verengt und vergrößert, was offenbar der besonders wirksamen Vorvereinzelung dient.

Auch wenn anstelle der Austragslippe eine andere Vereinzelungsvorrichtung wie ein volumetrischer Förderer, eine Zellradschleuse oder dergleichen eingesetzt wird, lässt sich eine deutliche Verbesserung der Gesamtvereinzelungsleistung und Vergleichmäßigung der Förderung erzielen. Die Verstopfungsneigung ist in einem derartigen Fall wesentlich verbessert, und das stückige Material strömt praktisch in einer Schicht definierter Höhe ab, wobei die Schichthöhe erfindungsgemäß bevorzugt über den unteren Bereich der Schrägfläche der Dosierkammer im Wesentlichen gleich ist. Dies erlaubt eine Art gesteuerten Rückstau für das erfindungsgemäß geförderte Füllmaterial, der einerseits das auf der Auftragslippe oder sonstigen Ausgangsfördervorrichtung der Dosierkammer lastende Gewicht drastisch, beispielsweise um mehr als eine Zehnerpotenz, reduziert, aber andererseits auch bei recht großen und schlecht durchleitbaren körnigen Füllmaterialien eine unterbrechungsfreie Förderung gewährleistet.

Zudem lässt sich durch die verbesserte Vereinzelung eine Brückenbildung beim Befüllen der Reaktionsrohr vermeiden und damit ein höherer Verdichtungsgrad erzielen. Die erfindungsgemäß beim Befüllen verbesserte Pärtikelvereinzelung erlaubt eine homogenere Befüllung der Rohre und ermöglicht auch eine höhere Füllgeschwindigkeit.

Erfindungsgemäß lässt sich durch den etwa in der Mitte der Schrägfläche vorgesehenen Spalt die Schwungentleerung der Dosierkammer sicher vermeiden. Derartige Schwüngentleerungen sind bei Austragslippen zu beobachten, die mit dem gesamten Füllgewicht der Dosierkammer belastet sind und vergleichsweise nachgiebig ausgestaltet oder eingestellt sind. Bei einer Schwungentleerung öffnet sich die Austragslippe durch seitliche Auslenkung, und das ausströmende Material reißt dann das nachströmende Material mit, so dass wesentlich mehr Material ausströmt als beabsichtigt ist. Dies lässt sich durch die erfindungsgemäße Vorvereinzelung sicher vermeiden.

Die in vorteilhafter Ausgestaltung vorgesehene Austragslippe kann wie eine Schürze ausgangsseitig der Dosierkammer vorgesehen sein und lässt sich durch das dort geförderte Füllmaterial seitlich auslenken. Erwünscht ist die hierdurch erzeugte Scherwirkung zwischen dem Rüttelboden und der Austragslippe, zusätzlich zu der Scherwirkung die an dem erfindungsgemäßen Spalt entsteht.

Überraschend ergibt sich mit der erfindungsgemäßen Beschickungsvorrichtung eine deutlich gleichmäßigere Befüllung der Reaktorrohre. Das manuelle Nacharbeiten ist praktisch nicht mehr erforderlich, auch wenn hohe Ansprüche an die Gleichmäßigkeit der Füllung und damit an die Qualität und Ausbeute des Reaktionsprodukts gestellt werden. Insbesondere wird bei Hochbeladungsreaktoren die Verweilzeit des Einsatzstoffes zwischen den Rohren vergleichmäßigt, so dass die Einsatzstoffe sogar im Explosionsbereich gefahren werden können.

Erfindungsgemäß ist es besonders günstig, dass sich bei Mehrlagenkatalysatorsystemen die Aktivitäten der einzelnen Katalysatorlagen dem Reaktionsverlauf entlang der Reaktorachse anpassen lassen. Dadurch ist es möglich, eine hohe Ausbeute am Wertprodukt und gleichzeitig eine möglichst geringe Ausbildung von unerwünschten Zwischenprodukten zu erzielen.

Die Erfindung ist nicht auf die Verwendung bestimmter Füllmaterialien beschränkt. Die Füllmaterialpartikel können zum Beispiel im Form von Ringen, Kugeln, Tabletten, gelochten Tabletten, Trilobes, gelochten Trilobes, Sternsträngen, Sterntabletten, Wagenrädern, Extrudateh, Pillen oder Zylindern oder granulärem Material ausgebildet sein, wobei sowohl Vollkatalysatormaterial als auch katalytisch beschichtetes Trägermaterial eingesetzt werden kann. Im Fall von katalytisch beschichtetem Trägermaterial kommen als Trägermaterial beispielsweise Siliziumcarbid oder Steatit als bevorzugte Materialien, aber auch Quarz, Porzellan, SiO₂, Al₂O₃ oder Tonerde in Frage.

Mit derartigen Rohrbündelreaktoren lassen sich verschiedene Wertprodukte herstellen, beispielsweise Phthalsäureanhydrid, Maleinsäureanhydrid,_Formaldehyd, Acrolein, Acrylsäure, Methacrylsäure, Acrylnitril, Glyoxal, Ethylenoxid, Vinylchlorid, Vinylacetat, Oxoalkohole, Styrol. Der Rohrbündelreaktor lässt' sich auch für die Selektivhydrierung von Alkinen und Dienen z.B. in olefinischen Strömen einsetzen.

Weitere Einzelheiten, Vorteile und Merkmale ergeben sich aus der nachfolgenden Beschreibung eines Ausführungsbeispiels der Erfindung anhand der Zeichnungen.

Es zeigen:
- Fig. 1: eine perspektivische Darstellung eines Teils einer erfindungsgemäßen Dosiervorrichtung, nämlich der Dosierkammereinheit; und
- Fig. 2: eine schematische Schnitt durch eine Ausführungsform einer erfindungsgemäßen Beschickungsvorrichtung.

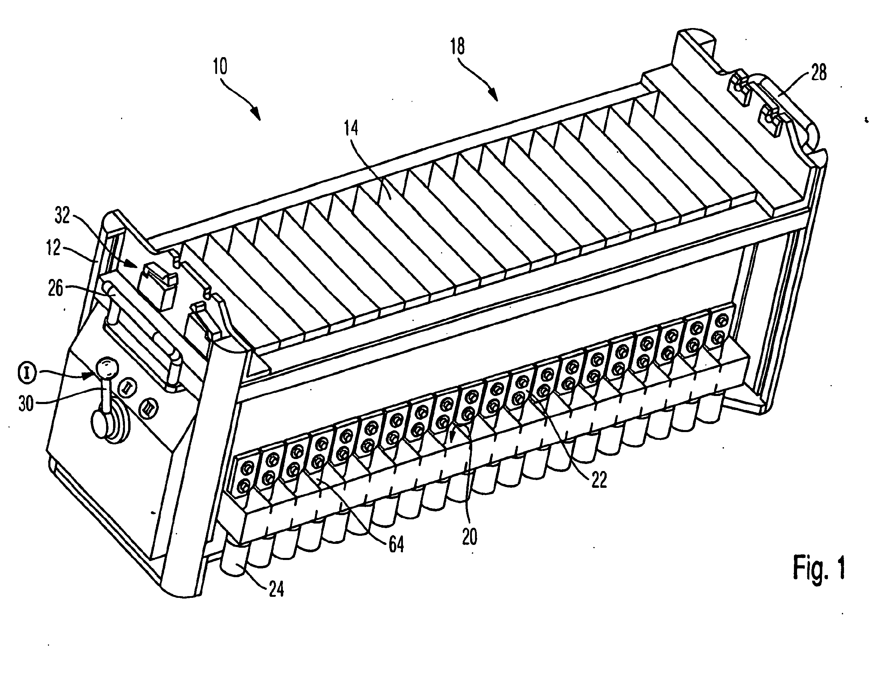

Die in Fig. 1 dargestellte Beschickungsvorrichtung 10 weist einen Rahmen 12 auf, der eine Vielzahl von Dosierkammern 14, die zu einer Dosierkammereinheit 18 zusainmengefasst.sind, trägt. Auslassseitig der Dosierkammern 14 sind, die Fallrohre 24,vorgesehen, die dafür bestimmt sind, oberhalb von Rohren eines Rohrbühdelreaktors zu enden. Die Fallrohre 24 weisen dementsprechend einen etwas geringeren Durchmesser als die Rohre des Rohrbündelreaktors auf.

Die Dosierkammern 14 haben eine Breite, die im Wesentlichen der eines Fallrohrs entspricht. Es sind im Beispielsfall 20 Dosierkammern 14 nebeneinander vorgesehen, wobei es sich versteht, dass diese Anzahl in weiten Bereichen an die Erfordernisse anpassbar ist. Auslassseitig weist jede Dosierkammer eine Austragslippe 64 auf, die nach der Art einer Schürze in einen Auslasskanal 20 der Dosierkammer hineinragt. Über eine Halteplatte 22 ist jede Austragslippe 64 verstellbar in dem Auslasskanal 20 gelagert.

Die Dosierkammereinheit 18 weist an ihren Stirnseiten je einen, Handgriff 26 und 28 auf, über den sie beispielsweise auf die Oberseite des Rohrbündelreaktors aufbringbar ist. Ferner ist ein Wählhebel 30 vorgesehen, der Teil einer Wählvorrichtung ist, über die hier zu verwendendes Füllmaterial wählbar ist. Der Wählhebel weist drei Stellungen; I, II und III auf. Es versteht sich, dass anstelle dessen auch ohne weiteres mehr oder weniger als drei Lagen des Füllmaterials bzw. entsprechende Stellungen möglich sind. Er wirkt in Verbindung mit einer Codierung 32 beim Aufsetzen der zugehörigen Vorkammereinheit. Hier ist die Codierung 32 über Mikroschalter dargestellt, wobei es sich versteht, dass eine beliebige andere Codierung ebenfalls möglich ist.

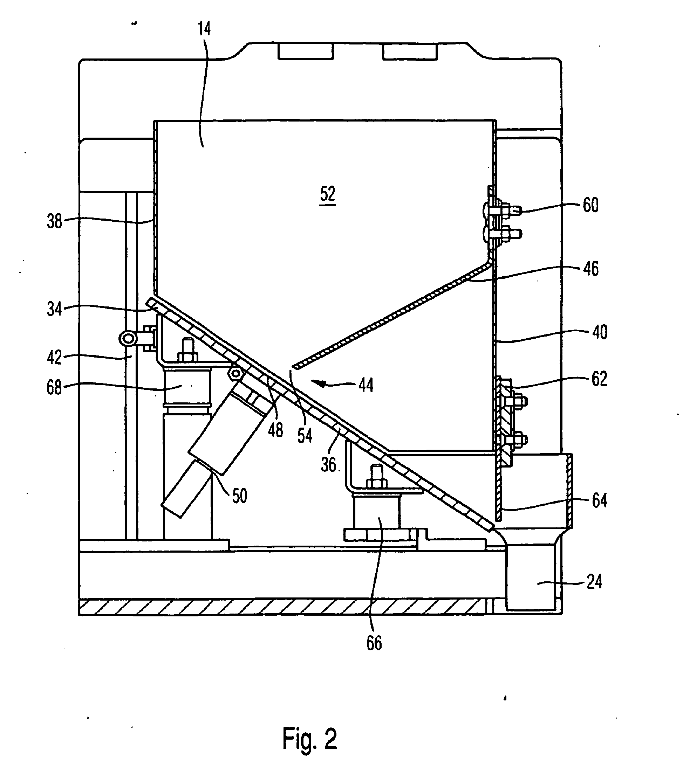

Aus Fig. 2 ist ersichtlich, dass die Dosierkammer 14 an ihrem für die Aufnahme des Füllmaterials vorgesehenen Boden 34 eine Schrägfläche 36 aufweist, die sich in dem dargestellten Ausführungsbeispiel über die gesamte Breite der Dosierkammer 14, also von einer Seitenwand 38 bis zu einer gegenüberliegenden Seitenwand 40 erstreckt.

Die Schrägfläche ist in dem dargestellten Ausführungsbeispiel in einem Winkel von etwa 35° zur Horizontalen angeordnet. Über eine Verstelleinrichtung 42 lässt sich der Schrägstellungswinkel der Schrägfläche 36 jedoch in weiten Bereichen an die Erfordernisse anpassen.

Die Schrägfläche 36 nimmt das Füllmaterial auf und stützt es von unten ab. Etwa auf ihrer halben Höhe, bevorzugt etwas oberhalb dieser Stelle, ist ein Spalt 44 vorgesehen, der zwischen der Schrägfläche 36 und der erfindungsgemäßen Gegenfläche 46 ausgebildet ist. Der Spalt 44 erstreckt sich in der Zeichnüngsrichtung zwischen dem unteren Ende der Gegenfläche 46 und der Schrägfläche 36. Durch die Verlängerung der Gegenfläche 46 wird auf der Schrägfläche 36 insofern ein Auftreffpunkt gebildet. In der Nähe dieses Auftreffpunkts ist eine Anlenkung 48 eines Rüttlers 50 vergesehen, der insofern die Schrägfläche 36 über die Anlenkung 48 in Rüttelbewegungen oder Schwingungen versetzen kann.

Die hier beispielhaft dargestellte Ausführungsform erlaubt die Aufnahme von Füllmaterial in einem Vorratsbereich 52, der sowohl oberhalb der Gegenfläche 46 als auch oberhalb der Schrägfläche 36 gebildet ist und unten in dem Spalt .44 endet. Dort ist das Haupt-Gewicht des Füllmaterials aüfgenommen, und wird zum großen Teil von der Gegenfläche 46 abgestützt, nachdem diese sich über etwas mehr als über die halbe Breite der Dosierkammer erstreckt, beispielsweise über 55 bis 60% der Breite.

Die Schrägfläche 36 ist insofern stark entlastet, und im Bereich ihrer Hauptschwingungsamplitude, dem Auftreffpunkt 54 benachbart, entsteht eine Vorvereinzelung an dem Spalt 44.

Hierzu lässt sich die Gegenfläche 46, die über Schräubbolzen 60. mit der Seitenwand 40 verbunden ist, in ihrer Höhe einstellen. Eine höhere Einstellung vergrößert den Spalt 44, während eine abgesenkte Einstellung den Spalt 44 reduziert.

Am unteren Ende der Seitenwand 40 ist erfindungsgemäß die Austragslippe 64 aufgehängt, wobei auch hier eine Verstellung über eine verstellbare Aufhängevorrichtung 62 realisierbar ist. Die Auftragslippe 64 besteht aus Gummi oder einem anderen Elastomer und hängt biegeschlaff nach unten, bis knapp oberhalb des unteren Endes der Schrägfläche 36. Hierdurch ergibt sich die Möglichkeit der Nachvereinzelung des stückigen Füllmaterials

Das Füllmaterial wird insofern zunächst am Spalt 44 vorvereinzelt und durch die Wirkung der Auftragslippe 64 gegenüber der Schrägfläche 36 nachvereinzelt, bevor es in das Fallrohr 24 eintreten kann.

Die Schrägfläche 36 ist über Elastikblöcke 66, 68 gelagert. Die Lagerung erfolgt deutlich beabstandet von dem Auftreffpunkt 54 und der Anlenkung 48 des Rüttlers 50'. Hierdurch lässt sich ein leichteres Schwingen und eine entsprechende Auslenkung der Schrägfläche 36 gewährleisten, wobei die Elastikblöcke 66 und 68 dämpfend auf etwaige unerwünschte Resonanzschwingungen wirken.

Die erfindungsgemäße Beschickungsvorrichtung erlaubt es, bis zu 2.000 Rohre pro Stunde zu befüllen, so dass auch ein großer Rohrbündelreaktor in ein bis zwei Tagen befüllbar ist, und so dass der bei manuellem Befüllen erforderliche Stillstand der Anlage von beispielsweise vier Wochen auf einen Tag reduziert werden kann.

## Patentansprüche

1. Rohrbündelreaktor-Beschickungsvorrichtung, mit Dosierkammern (14), die mit Füllmaterial, wie z.B. katalytisch beschichtetem Trägermaterial, befüllbar sind, wobei über eine Zuführeinrichtung (24), die sich an die Dosierkammer (14) anschliesst, je ein Rohr des Rohrbündelreaktor befüllbar ist, wobei die Dosierkammer (14) eine Schrägfläche (36) und eine Gegenfläche (46) für die Abstützung des Füllmaterials aufweist, die im Winkel zueinander und mit im Vorzeichen entgegengesetzter Neigung verlaufen, und wobei sich zwischen der Schrägfläche (36) und der Gegenfläche (46) ein Spalt (44) erstreckt, der für den Durchlass des Füllmaterials bestimmt ist, **dadurch gekennzeichnet, dass** sich der Spalt (44) etwa auf halber Höhe der Schrägfläche (36) befindet.

2. Beschickungsvorrichtung nach Anspruch 1, **dadurch gekennzeichnet, dass** die Neigung der Schrägfläche (36) einstellbar ist.

3. Beschickungsvorrichtung nach einem der vorhergehenden Ansprüche, **dadurch gekennzeichnet, dass** die Höhe und/oder die Neigung der Gegenfläche (46) einstellbar ist.

4. Beschickungsvorrichtung nach einem der vorhergehenden Ansprüche, **dadurch gekennzeichnet, dass** die Gegenfläche (46) sich mindestens teilweise oberhalb der Schrägfläche (36) erstreckt und in Vertikalprojektion die Gegenfläche (46) die Schrägfläche (36) mindestens überwiegend überlappt.

5. Beschickungsvorrichtung nach einem der vorhergehenden Ansprüche, **dadurch gekennzeichnet, dass** die Gegenfläche (46) zusammen mit der Schrägfläche (36) im Wesentlichen die Form eines y bildet, jedoch unter Belassung eines Spalts (44) zwischen den Schenkeln.

6. Beschickungsvorrichtung nach einem der vorhergehenden Ansprüche, **dadurch gekennzeichnet, dass** die Schrägfläche (36) mit einem Rüttler (50) verbunden ist, über welchen sie mindestens teilweise in Rüttelbewegungen versetzbar ist.

7. Beschickungsvorrichtung nach einem der vorhergehenden Ansprüche, **dadurch gekennzeichnet, dass** sich die Schrägfläche (36) über einen Teil des Bodens der Dosierkammer (14) erstreckt.

8. Beschickungsvorrichtung nach einem der Ansprüche 1 bis 6, **dadurch gekennzeichnet, dass** die Schrägfläche (36) sich über den gesamten Boden der Dosierkammer (14) erstreckt.

9. Beschickungsvorrichtung nach einem der vorhergehenden Ansprüche, **dadurch gekennzeichnet, dass** oberhalb der Dosierkammer (14) je eine Vorkammer angeordnet ist, über welche die Dosierkammer (14) beschickbar ist, wobei insbesondere mehrere Dosierkammern (14) zu einer Dosierkammereinheit (18) und mehrere Vorkammern zu einer Vorkammereinheit zusammengefasst sind.

10. Beschickungsvorrichtung nach Anspruch 9, **dadurch gekennzeichnet, dass** ein Schieber zwischen Vorkammereinheit und Dosierkammereinheit vorgesehen ist, durch dessen Betätigung Füllmaterial von der Vorkammereinheit in die Dosierkammereinheit (18) überführbar ist.

11. Beschickungsvorrichtung nach einem der vorhergehenden Ansprüche, **dadurch gekennzeichnet, dass** die Dosierkammern (14) einen Dosierausgang aufweisen, der zwischen einer Austragslippe (64) und einem Boden der Dosierkammer (14) gebildet ist, und dass die Austragslippe (64) an der Dosierkammer (14) befestigt ist.

12. Beschickungsvorrichtung nach einem der vorhergehenden Ansprüche, **dadurch gekennzeichnet, dass** eine Austragslippe (64) an einem Dosierausgang für jede Dosierkammer (14) nach der Art einer Schürze aufgehängt ist.

13. Beschickungsvorrichtung nach Anspruch 12, **dadurch gekennzeichnet, dass** die Austragslippe (64) hinsichtlich ihrer Höhenlage einstellbar an der Dosierkammer (14) gelagert und insbesondere biegeschlaff ist, wobei sie insbesondere zwischen 1mm und 4cm, bevorzugt zwischen 1cm und 2cm, oberhalb des Bodens der Dosierkammer (14) endet.

14. Beschickungsvorrichtung nach einem der vorhergehenden Ansprüche, **dadurch gekennzeichnet, dass** die Dosierkammern (14) trichterförmig ausgebildet sind und dass die Schrägfläche (36) einen Schrägstellungswinkel von 15° bis 60° gegenüber der Horizontalen, bevorzugt etwa 45° bis 25° und insbesondere etwa 35° beträgt.

15. Beschickungsvorrichtung nach einem der vorhergehenden Ansprüche, **dadurch gekennzeichnet, dass** die Gegenfläche (46) einen Schrägstellungswinkel aufweist, der im Wesentlichen dem Schrägstellungswinkel der Schrägfläche (36) entspricht und 15° bis 60° gegenüber der Horizontalen, bevorzugt etwa 45° bis 25° und insbesondere etwa 35° beträgt.

16. Beschickungsvorrichtung nach einem der vorhergehenden Ansprüche, **dadurch gekennzeichnet, dass** die Breite des Spalts (44) zwischen Schrägfläche (36) und Gegenfläche (46) einstellbar ist.

17. Beschickungsvorrichtung nach einem der vorhergehenden Ansprüche, **dadurch gekennzeichnet, dass** ein Rüttler (50) mit der Schrägfläche (36) - in der seitlichen Projektion gesehen - etwa in der Mitte verbunden ist und dass die Verlängerung der Gegenfläche (46) zur Schrägfläche (36) hin einen Auftreffpunkt bildet und der Rüttler (50) im Wesentlichen an dem Auftreffpunkt mit der Schrägfläche (36) verbunden ist.

18. Beschickungsvorrichtung nach einem der vorhergehenden Ansprüche, **dadurch gekennzeichnet, dass** die Schrägfläche (36) an einem Gehäuse der Dosierkammer (14) gelagert ist, insbesondere vertikal beweglich gelagert ist und dass die Lagerung von einer Anlenkung des Rüttlers (50) beabstandet ist und insbesondere über Elastikblöcke (66, 68) erfolgt.

19. Beschickungsvorrichtung nach einem der vorhergehenden Ansprüche, **dadurch gekennzeichnet, dass** die Schrägfläche (36) über voneinander beabstandete Lager an einem Gehäuse der Dosierkammer (14) gelagert ist und dass die Lager eine in horizontaler Richtung feste und in vertikaler Richtung bewegliche Führung aufweisen.

20. Beschickungsvorrichtung nach einem der vorhergehenden Ansprüche, **dadurch gekennzeichnet, dass** mehrere Dosierkammern (14) über einen gemeinsamen Rüttler (50) rüttelbar sind und dass ein Verbindungsbalken unter dem Boden der Dosierkammer (14) ausgebildet ist, der sich über mehrere Dosierkammern (14) erstreckt und die Krafteinleitung des Rüttlers (50) vergleichmässigt.

21. Beschickungsvorrichtung nach einem der vorhergehenden Ansprüche, **dadurch gekennzeichnet, dass** die Gegenfläche (46) als geneigte Gegenfläche mit einem Schrägstellungswinkel von 10° bis 65°, insbesondere 20° bis 45° und bevorzugt etwa 30° ausgebildet ist, wobei sich der Schrägstellungswinkel insbesondere über einen Bereich von etwa 20° verstellen lässt.

22. Verfahren zum Betrieb einer Beschickungsvorrichtung für Rohrbündelreaktoren, die eine Mehrzahl von Dosierkammern (14), die mit Trägermaterial befüllbar sind, und eine sich an die Dosierkammer (14), anschließende Zuführeinrichtung (24) aufweist, über die je ein Rohr des Rohrbündelreaktors befüllbar ist, wobei die Dosierkammer (14) eine Schrägfläche (36) und eine Gegenfläche (46) für die Abstützung des Füllmaterials aufweist, die im Winkel zueinander und mit im Vorzeichen entgegengesetzter Neigung verlaufen, und wobei sich zwischen der Schrägfläche (36) und der Gegenfläche (46) ein Spalt (44) erstreckt, der für den Durchlass des Füllmaterials bestimmt ist, **dadurch gekennzeichnet, dass** ein Rüttler (50) beim Beschicken eine Schrägfläche (36) am Boden der Dosierkammern (14) rüttelt und dass der Spalt (44) zwischen der Schrägfläche (36) und der Gegenfläche (46) das Trägermaterial mindestens teilweise zurückhält und insbesondere vereinzelt.

23. Verfahren nach Anspruch 22, **dadurch gekennzeichnet, dass** der Spalt in Abhängigkeit von dem Füllmaterial in seiner Breite einstellbar ist und dass die Gegenfläche (46) im Wesentlichen die Hälfte des Gewichts des in der Dosierkammer (14) aufgenommenen Füllmaterials aufnimmt.

24. Verfahren nach einem der Ansprüche 22 oder 23, **dadurch gekennzeichnet, dass** eine Austragslippe (64) ausgangsseitig der Dosierkammer (14) das Füllmaterial aus der Dosierkammer (14) herausgleiten lässt und in einer Schichthöhe des Füllmaterials beschickt wird, die weniger als 10 cm, insbesondere weniger als 5 cm und bevorzugt etwa 2 cm beträgt.

## Claims

1. Charging device for a tube bundle reactor, comprising metering chambers (14), which can be filled with filling material, such as, for example, catalytically coated carrier material, it being possible for a respective tube of the tube bundle reactor to be filled via a feed device (24) which adjoins the metering chamber (14), wherein the metering chamber (14) comprises a sloping surface (36) and an opposing surface (46) for supporting the filling material, which surfaces run at an angle to one another and with opposite inclination, and wherein a gap (44) extends between the sloping surface (36) and the opposing surface (46) which gap is destined for the passage of the filling material, **characterized in that** the gap (44) is located approximately at half height of the sloping surface (36).

2. Charging device according to claim 1, **characterized in that** the inclination of the sloping surface (36) is adjustable.

3. Charging device according to any one of the preceding claims, **characterized in that** a height and/or the inclination of the opposing surface (46) is adjustable.

4. Charging device according to any one of the preceding claims, **characterized in that** the opposing surface (46) extends at least partly above the sloping surface (36), and in vertical projection, the opposing surface (46) at least predominantly overlaps the sloping surface (36).

5. Charging device according to any one of the preceding claims, **characterized in that** the opposing surface (46) together with the sloping surface (36) forms essentially the shape of a y, but with the gap (44) left between the legs.

6. Charging device according to any one of the preceding claims, **characterized in that** the sloping surface (36) is connected to a vibrator (50) via which the sloping surface (36) can be vibrated at least partially.

7. Charging device according to any one of the preceding claims, **characterized in that** the sloping surface (36) extends over part of the base of the metering chamber (14).

8. Charging device according to any one of claims 1 to 6, **characterized in that** the sloping surface (36) extends over the entire base of the metering chamber (14).

9. Charging device as claimed in any one of the preceding claims, **characterized in that** a respective pre-chamber is arranged above the metering chamber (14), via which the metering chamber (14) can be charged, in particular a plurality of metering chambers (14) being combined to a metering chamber unit (18) and a plurality of pre-chambers being combined to a pre-chamber unit.

10. Charging device according to claim 9, **characterized in that** a slide is provided between the pre-chamber unit and the metering chamber unit and, by the actuation of which slide, filling material can be transferred from the pre-chamber unit into the metering chamber unit (18).

11. Charging device according to any one of the preceding claims, **characterized in that** the metering chambers (14) comprise metering outlets which are formed between a discharge lip (64) and a base of the metering chamber (14), and **in that** the discharge lip is fastened to the metering chamber (14).

12. Charging device according to any one of the preceding claims, **characterized in that** the discharge lip (64) is suspended like an apron at the metering outlet for each metering chamber (14).

13. Charging device according to claim 12, **characterized in that** the discharge lip (64) is mounted on the metering chamber (14) in such a way as to be adjustable in its vertical position and, in particular, is flexible, ending between 1 mm and 4 cm, preferably between 1 cm and 2 cm, above the base of the metering chamber (14).

14. Charging device according to any one of the preceding claims, **characterized in that** the metering chambers (14) are of funnel-shaped design, and **in that** the sloping surface (36) has an angle of inclination of 15° to 60°, preferably about 45° to 25°, in particular about 35°, relative to the horizontal.

15. Charging device according to any one of the preceding claims, **characterized in that** the opposing surface (46) has an angle of inclination which corresponds essentially to the angle of inclination of the sloping surface (36) and is 15° to 60°, preferably about 45° to 25°, in particular about 35°, relative to the horizontal.

16. Charging device according to any one of the preceding claims, **characterized in that** the width of the gap (44) between the sloping surface (36) and the opposing surface (46) is adjustable.

17. Charging device according to any one of the preceding claims, **characterized in that** a vibrator (50) is connected to the sloping surface (36) approximately in the centre, as viewed in lateral projection, and **in that** an extension of the opposing surface (46) toward the sloping surface (36) forms an impingement point, and the vibrator (50) is connected to the sloping surface (36) essentially at the impingement point.

18. Charging device according to any one of the preceding claims, **characterized in that** the sloping surface (36) is mounted on a housing of the metering chamber (14), in particular in a vertically movable manner, and **in that** the mounting is at a distance from a coupling of the vibrator (50) and is effected in particular via elastic blocks (66, 68) .

19. Charging device according to any one of the preceding claims, **characterized in that** the sloping surface (36) is mounted on the housing of the metering chamber (14) via spaced-apart mounts, and **in that** the mounts have a guide fixed in the horizontal direction and movable in the vertical direction.

20. Charging device according to any one of the preceding claims, **characterized in that** a plurality of the metering chambers (14) can be vibrated via a common vibrator (50), and **in that** a connecting beam is formed under a base of the metering chambers (14), said connecting beam extending over a plurality of metering chambers (14) and making the introduction of force into the vibrator (50) more uniform.

21. Charging device according to any one of the preceding claims6, **characterized in that** the opposing surface (46) is formed as an inclined opposing surface with an angle of inclination of 15° to 65°, in particular 20° to 45° and, preferably about 30°, the angle of inclination being adjustable, in particular within a range of about 20°.

22. Method of operating a charging device for tube bundle reactors, which comprise a plurality of metering chambers (14), which can be filled with filling material, and a feed device (24), which adjoins the metering chamber (14) and via which a respective tube of the tube bundle reactor can be filled, wherein the metering chamber (14) comprises a sloping surface (36) and an opposing surface (46) for supporting the filling material, which surfaces run at an angle to one another and with opposite inclination, and wherein a gap (44) extends between the sloping surface (36) and the opposing surface (46) which gap is destined for the passage of the filling material, **characterized in that** a vibrator (50) vibrates the base of the metering chambers (14) during the charging, and **in that** the gap (44) between the sloping surface (36) and an opposing surface (46) at least partly holds back the carrier material and in particular singulates it.

23. Method according to claim 22, **characterized in that** the gap can be adjusted in its width in relation to the filling material and that the opposing surface (46) takes up essentially half the weight of the filling material received in the metering chamber (14).

24. Method according to any one of claims 22 or 23, **characterized in that** a discharge lip (64) on an outlet side of the metering chamber (14) allows the filling material to slide out of the metering chamber (14) and is charged at a layer height of the filling material which is less than 10 cm, in particular less than 5 cm and preferably less than 2 cm.

## Revendications

1. Dispositif de chargement de réacteur à faisceau tubulaire avec des chambres de dosage (14), pouvant être remplies d'un matériau de charge comme par exemple une matière inerte à revêtement catalytique, où un appareil d'alimentation (24) relié à la chambre de dosage (14) permet de remplir chaque tuyau du réacteur à faisceau tubulaire, où la chambre de dosage (14) présente une surface inclinée (36) et une contre-surface (46) servant de support au matériau de charge, qui sont orientées selon un certain angle l'une par rapport à l'autre et suivant une inclinaison opposée telle qu'illustrée, et où une fente (44) s'étend entre la surface inclinée (36) et la contre-surface (46) pour servir au passage du matériau de charge, **caractérisé en ce que** la fente (44) se situe environ à mi-hauteur de la surface inclinée (36) .

2. Dispositif de chargement selon la revendication 1, **caractérisé en ce que** l'inclinaison de la surface inclinée (36) est réglable.

3. Dispositif de chargement selon une des revendications précédentes, **caractérisé en ce que** la hauteur et/ou l'inclinaison de la contre-surface (46) sont réglables.

4. Dispositif de chargement selon une des revendications précédentes, **caractérisé en ce que** la contre-surface (46) s'étend au moins partiellement au-dessus de la surface inclinée (36) et que dans le sens vertical la contre-surface (46) recouvre au moins principalement la surface inclinée (36) .

5. Dispositif de chargement selon une des revendications précédentes, **caractérisé en ce que** la contre-surface (46) constitue sensiblement avec la surface inclinée (36) une forme de Y à condition toutefois que les branches soient séparées par une fente (44).

6. Dispositif de chargement selon une des revendications précédentes, **caractérisé en ce que** la surface inclinée (36) est reliée à un dispositif vibrateur (50) par le biais duquel elle subit au moins partiellement des mouvements de secousses.

7. Dispositif de chargement selon une des revendications précédentes, **caractérisé en ce que** la surface inclinée (36) s'étend au-dessus d'une partie du fond de la chambre de dosage (14).

8. Dispositif de chargement selon une des revendications 1 à 6, **caractérisé en ce que** la surface inclinée (36) s'étend au-dessus de la totalité du fond de la chambre de dosage (14).

9. Dispositif de chargement selon une des revendications précédentes, **caractérisé en ce que** une pré-chambre est disposée au-dessus de chaque chambre de dosage (14) pour lui permettre d'alimenter la chambre de dosage (14), où notamment plusieurs chambres de dosage (14) sont rassemblées en une unité de chambres de dosage (18) et plusieurs pré-chambres sont assemblées en une unité de pré-chambres.

10. Dispositif de chargement selon la revendication 9, **caractérisé en ce que** un coulisseau est prévu entre l'unité de pré-chambres et l'unité de chambres de dosage, l'actionnement de celui-ci permettant de transvaser le matériau de charge de l'unité de pré-chambres dans l'unité de chambres de dosage (18).

11. Dispositif de chargement selon une des revendications précédentes, **caractérisé en ce que** les chambres de dosage (14) présentent une sortie de dosage formée entre une lèvre de décharge (64) et un fond de chambre de dosage (14) et **en ce que** la lèvre de décharge (64) est fixée sur la chambre de dosage (14).

12. Dispositif de chargement selon une des revendications précédentes, **caractérisé en ce que** une lèvre de décharge (64) est suspendue à la manière d'une jupe à une sortie de dosage pour chaque chambre de dosage (14).

13. Dispositif de chargement selon la revendication 12, **caractérisé en ce que** la lèvre de décharge (64) est montée en une position réglable en hauteur sur la chambre de dosage (14) et est particulièrement souple à la flexion, où elle s'arrête notamment entre 1mm et 4cm et de préférence entre 1cm et 2cm au-dessus du fond dé la chambre de dosage (14).

14. Dispositif de chargement selon une des revendications précédentes, **caractérisé en ce que** les chambres de dosage (14) sont construites en forme de trémie et **en ce que** la surface inclinée (36) présente par rapport à l'horizontale un angle d'inclinaison de 15° à 60°, de préférence d'environ 45° à 25° et en particulier d'environ 35°.

15. Dispositif de chargement selon une des revendications précédentes, **caractérisé en ce que** la contre-surface (46) présente un angle d'inclinaison qui correspond sensiblement à l'angle d'inclinaison de la surface inclinée (36) et représente par rapport à l'horizontale un angle de 15° à 60°, de préférence d'environ 45° à 25° et en particulier d'environ 35°.

16. Dispositif de chargement selon une des revendications précédentes, **caractérisé en ce que** la largeur de la fente (44) entre la surface inclinée (36) et la contre-surface (46) est réglable.

17. Dispositif de chargement selon une des revendications précédentes, **caractérisé en ce que** un dispositif vibrateur (50) est relié environ au milieu de la surface inclinée (36) vue d'une perspective latérale et **en ce que** une prolongation de la contre-surface (46) en direction de la surface inclinée (36) constitue un point d'impact et **en ce que** le dispositif vibrateur (50) est relié à la surface inclinée (36) sensiblement au niveau du point d'impact.

18. Dispositif de chargement selon une des revendications précédentes, **caractérisé en ce que** la surface inclinée (36) est montée sur un boîtier de chambre de dosage (14), en une position modifiable particulièrement dans le sens vertical et **en ce que** ce positionnement est distant du point d'appui du dispositif vibrateur (50) et se fait particulièrement au moyen de blocs élastiques (66, 68).

19. Dispositif de chargement selon une des revendications précédentes, **caractérisé en ce que** la surface inclinée (36) est positionnée sur un boîtier de chambre de dosage (14) au moyen de coussinets distants l'un de l'autre et **en ce que** les coussinets offrent un guidage fixe dans le sens horizontal et coulissable dans le sens vertical.

20. Dispositif de chargement selon une des revendications précédentes, **caractérisé en ce que** plusieurs chambres de dosage (14) peuvent être secouées par un même dispositif vibrateur (50) et **en ce que** une poutre de liaison est située sous le fond de les chambres de dosage (14), se prolonge sous plusieurs chambres de dosage (14) et permet une répartition régulière des forces du dispositif vibrateur (50).

21. Dispositif de chargement selon une des revendications précédentes, **caractérisé en ce que** la contre-surface (46) est construite comme contre-surface inclinée présentant un angle d'inclinaison de 10° à 65°, en particulier de 20° à 45° et de préférence d'environ 30°, où l'angle d'inclinaison est notamment modifiable selon une marge d'environ 20°.

22. Procédé de fonctionnement d'un dispositif de chargement de réacteur à faisceau tubulaire, qui présente une pluralité de chambres de dosage (14), pouvant être remplies d'une matière inerte et un appareil d'alimentation (24) relié à la chambre de dosage (14) qui permet de remplir chaque tuyau du réacteur à faisceau tubulaire, où la chambre de dosage (14) présente une surface inclinée (36) et une contre-surface (46) servant de support au matériau de charge, qui sont orientées selon un certain angle l'une par rapport à l'autre et suivant une inclinaison opposée telle qu'illustrée, et où une fente (44) s'étend entre la surface inclinée (36) et la contre-surface (46) pour servir au passage du matériau de charge, **caractérisé en ce que** un dispositif vibrateur (50) assure durant le chargement l'agitation d'une surface inclinée (36) sur le fond des chambres de dosage (14) et **en ce que** la fente (44) entre la surface inclinée (36) et la contre-surface (46) retient au moins partiellement la matière inerte et en assure particulièrement la séparation.

23. Procédé selon la revendication 22, **caractérisé en ce que** la fente offre une largeur réglable en fonction du matériau de charge et **en ce que** la contre-surface (46) supporte sensiblement la moitié du poids du matériau de charge collectée dans la chambre de dosage (14).

24. Procédé selon une des revendications 22 ou 23, **caractérisé en ce que** une lèvre de décharge (64) permet l'écoulement du matériau de charge hors de la chambre de dosage (14) du côté sortie de la chambre de dosage (14) , le matériau de charge étant chargée en couche de hauteur inférieure à 10cm, en particulier inférieure à 5cm et de préférence d'environ 2cm.
